# EUROPEAN PATENT APPLICATION

(11) **EP 1 653 246 A1**
(43) Date of publication of application: **03.05.2006**
(21) Application number: 05022694.3
(22) Date of filing: 18.10.2005
(51) Int. Cl.: G01S 5/14

(54) **Positioning system, terminal device, information provision device, terminal device's control method, and terminal device's control program**

(30) Priority: 26.10.2004 JP 2004310961
(71) Applicant: SEIKO EPSON CORPORATION, Shinjuku-ku, Tokyo 163-0811 (JP)
(72) Inventor: Hayashi, Akifumi, Suwa-shi, Nagano-ken 392-8502 (JP)
(74) Representative: HOFFMANN EITLE

(57) **Abstract**

A positioning system including: a terminal device that determines a current position based on a position-related signal from a position information satellite; and an information provision device that is communicable with the terminal device and has a terrain information storage unit that stores terrain information which includes divided terrain information having a specific terrain divided into plural pieces, wherein the terminal device has: a rough determined position information generation unit that generates rough determined position information for acquiring one piece of the divided terrain information from the information provision device; a divided terrain information request unit that makes a request to the information provision device for one piece of the divided terrain information which corresponds to a rough determined position indicated in the rough determined position information; and a high-accuracy determined position information generation unit that generates high-accuracy determined position information, using elevation information included in the divided terrain information, and wherein the information provision device has: a divided terrain information selection unit that selects one piece of the divided terrain information which corresponds to the rough determined position indicated in the rough determined position acquired from the terminal device; and a divided terrain information transmission unit that transmits to the terminal device one piece of the divided terrain information which corresponds to the rough determined position.

## Description

### BACKGROUND OF THE INVENTION

### 1. Technical Field

The present invention relates to a positioning system, terminal device, information provision device, terminal device's control method, and terminal device's control program, of position determination based on a signal from a position information satellite.

### 2. Related Art

A positioning system that determines the current position of a GPS receiver, using a satellite navigation system, e.g., a GPS (Global Positioning System), has conventionally been put to practical use.

And, technology has been proposed in which the GPS receiver holds a database including terrain information of various spots on the earth's surface and performs position determination using elevation information included in the terrain information (e.g., JP-T-2004-514144 (Figs. 1 etc.)).

When the GPS receiver acquires the terrain information (hereinafter called the orthometric height model) in advance, unknown information elements are only latitude, longitude, and time, thus providing the advantage of enabling high-accuracy position determination based on a signal from a GPS satellite.

However, a large-capacity recording unit (Data Storage) is required to hold the orthometric height model covering the entire earth. Therefore, when the GPS receiver only has a small-capacity recording unit, there is the problem of being unable to hold the orthometric height model.

Besides, even when an external device (e.g., an external server) holds the orthometric height model and the GPS receiver is to acquire the orthometric height model, such as by download, according to need, for example, a large data size of the orthometric height model to be downloaded provides the problem in which an orthomeric height model transmission/reception processing burden is large and a transmission/reception cost may increase.

### SUMMARY

Thereupon, an advantage of the invention is to provide a positioning system, terminal device, information provision device, terminal device's control method, and terminal device's control program, capable of making a high-accuracy positioning calculation, using terrain information, while reducing an increase in burden on and a terrain information transmission/reception processing burden on a recording unit of a terminal device such as a GPS receiver.

According to a first aspect of the invention, the aforesaid advantage is achieved by a positioning system comprising: a terminal device that determines a current position based on a position-related signal from a position information satellite; and an information provision device that is communicable with the terminal device and has a terrain information storage unit that stores terrain information which includes divided terrain information having a specific terrain divided into plural pieces. The terminal device includes: a rough determined position information generation unit that generates rough determined position information for acquiring one piece of the divided terrain information from the information provision device; a divided terrain information request unit that makes a request to the information provision device for one piece of the divided terrain information which corresponds to a rough determined position indicated in the rough determined position information; and a high-accuracy determined position information generation unit that generates high-accuracy determined position information, using elevation information included in the divided terrain information. And, the information provision device includes: a divided terrain information selection unit that selects one piece of the divided terrain information which corresponds to the rough determined position indicated in the rough determined position acquired from the terminal device; and a divided terrain information transmission unit that transmits to the terminal device one piece of the divided terrain information which corresponds to the rough determined position.

In accordance with the configuration of the first aspect of the invention, the information provision device can store terrain information, which includes a plurality of divided terrain information, in the terrain information storage unit.

And, by means of the divided terrain information obtainment unit, the terminal device can acquire one piece of the divided terrain information, which corresponds to a rough determined position indicated in the rough determined position information, from the information provision device. Furthermore, by means of the high-accuracy determined position information generation unit, the terminal device can generate the high-accuracy determined position information, using elevation information included in the divided terrain information.

Thus, the terminal device can generate the high-accuracy determined position information not by acquiring all the terrain information from the information provision device but by acquiring only one piece of the divided terrain information. One piece of the divided terrain information has a smaller information amount than all the terrain information.

This makes it possible to make a high-accuracy positioning calculation, using terrain information, while reducing an increase in burden on and a terrain information transmission/reception processing burden on the recording unit of the terminal device such as the GPS receiver.

According to a second aspect of the invention, it is preferable that the information amount of each piece of the divided terrain information is defined based on the information transmission rate of a communication line between the terminal device and the information provision device.

In accordance with the configuration of the second aspect of the invention, the information amount of each piece of the divided terrain information is defined based on the information transmission rate of a communication line between the terminal device and the information provision device. Therefore, the time required for the terminal device to acquire one piece of the divided terrain information can be reduced as compared with when the information amount of each piece of the divided terrain information is excessively larger than the information transmission rate of the communication line.

According to a third aspect of the invention, tt is preferable that each piece of the divided terrain information has a plurality of sample points, and that the positioning accuracy of the rough determined position information is defined based on the distance between the sample points.

In accordance with the configuration of the third aspect of the invention, the positioning accuracy of the rough determined position information is defined based on the distance between the sample points.

Consequently, to select one of the sample points included in one piece of the divided terrain information, the terminal device can select a sample point closest to the real position of the terminal device and use the elevation information of the selected sample point.

As a result, this can increase the positioning accuracy of the high-accuracy determined position information of the terminal device.

According to a fourth aspect of the invention, the aforesaid advantage is achieved by a terminal device that determines a current position based on a position-related signal from a position information satellite, comprising: a rough determined position information generation unit; a divided terrain information request unit; and a high-accuracy determined position information generation unit. The rough determined position information generation unit is communicable with the terminal device and generates rough determined position information for acquiring one piece of divided terrain information having a specific terrain divided into plural pieces, from an information provision device having a terrain information storage unit that stores terrain information including the divided terrain information. The divided terrain information request unit makes a request to the information provision device for one piece of the divided terrain information which corresponds to a rough determined position indicated in the rough determined position information. And, the high-accuracy determined position information generation unit generates high-accuracy determined position information, using elevation information included in the divided terrain information.

In accordance with the configuration of the fourth aspect of the invention, it is possible to make a high-accuracy positioning calculation, using terrain information, while reducing an increase in burden on and a terrain information transmission/reception processing burden on the recording unit of the terminal device such as the GPS receiver.

According to a fifth aspect of the invention, it is preferable that the terminal device is configured to receive the position-related signal, without determining the current position, before acquiring the divided terrain information after generating the rough determined position information.

After the rough determined position information is generated, reception of the position-related signal is brought to a stop. And, after the divided terrain information is acquired, reception of the position-related signal is started anew. Then, this requires time to catch the position information satellite.

In this respect, in accordance with the configuration of the fifth aspect of the invention, reception of the position-related signal is continuously performed even before the divided terrain information is acquired after the rough determined position information is generated. Therefore, immediately after the divided terrain information is acquired, generation of the high-accuracy determined position information can be started using the position-related signal. As a result, this can reduce the time before the high-accuracy determined position information is generated after the rough determined position information is generated.

According to a sixth aspect of the invention, it is preferable that the terminal device further comprises: a divided terrain information storage unit that stores the divided terrain information; and an in-terminal divided terrain information usability determination unit that determines whether or not the divided terrain information, which has been acquired during the preceding position determination and stored in the divided terrain information storage unit, corresponds to a rough determined position indicated in the rough determined position information newly generated. In this case, the terminal device is configured to generate the high-accuracy determined position information, using elevation information included in the divided terrain information that has been acquired during the preceding position determination and stored in the divided terrain information storage unit, based on the determination result of the in-terminal divided terrain information usability determination unit.

In accordance with the configuration of the sixth aspect of the invention, the terminal device causes the in-terminal divided terrain information usability determination unit to determine that the divided terrain information, which has been acquired during the preceding position determination and stored in the divided terrain information storage unit, corresponds to a rough determined position indicated in the rough determined position information newly generated. Then, in this case, the terminal device generates the high-accuracy determined position information, using elevation information included in the divided terrain information stored in the divided terrain information storage unit.

Consequently, if determining that the divided terrain information stored in the divided terrain information storage unit corresponds to the rough determined position indicated in the rough determined position information of the preceding position determination, the terminal device need not newly acquire the divided terrain information from the information provision device. Therefore, this can reduce the time before the high-accuracy determined position information is generated after the rough determined position information is generated.

According to a seventh aspect of the invention, the aforesaid advantage is achieved by an information provision device which is communicable with a terminal device that determines a current position based on a position-related signal from a position information satellite and which has a terrain information storage unit that stores terrain information including divided terrain information having a specific terrain divided into plural pieces, comprising a divided terrain information selection unit and a divided terrain information transmission unit. The divided terrain information selection unit selects one piece of the divided terrain information which corresponds to a rough determined position indicated in rough determined position information acquired from the terminal device. And, the divided terrain information transmission unit transmits to the terminal device one piece of the divided terrain information which corresponds to the rough determined position.

In accordance with the configuration of the seventh aspect of the invention, the information provision device stores, in the terrain information storage unit, terrain information including a plurality of divided terrain information. By means of the divided terrain information selection unit, the information provision device can select one piece of the divided terrain information which corresponds to a rough determined position indicated in rough determined position information acquired from the terminal device. And, by means of the divided terrain information transmission unit, the information provision device can transmit to the terminal device one piece of the divided terrain information which corresponds to the rough determined position.

Consequently, the information provision device can aid the terminal device in determining its position using the divided terrain information each piece of which has a smaller information amount than all the terrain information.

According to an eighth aspect of the invention, the aforesaid advantage is achieved by a terminal device's control method comprising: generating rough determined position information; requesting divided terrain information; and generating high-accuracy determined position information. In the method of generating rough determined position information, a terminal device, which determines a current position based on a position-related signal from a position information satellite, generates rough determined position information for acquiring one piece of divided terrain information having a specific terrain divided into plural pieces, from an information provision device which is communicable with the terminal device and has a terrain information storage unit that stores terrain information including the divided terrain information. In the method of requesting divided terrain information, the terminal device makes a request to the information provision device for one piece of the divided terrain information which corresponds to a rough determined position indicated in the rough determined position information. And, in the method of generating high-accuracy determined position information, the terminal device generates high-accuracy determined position information, using elevation information included in the divided terrain information.

According to a ninth aspect of the invention, the aforesaid advantage is achieved by a terminal device's control program allowing for execution of: a rough determined position information generation step; a divided terrain information request step; and a high-accuracy determined position information generation step. In the rough determined position information generation step, a terminal device, which determines a current position based on a position-related signal from a position information satellite, generates rough determined position information for acquiring one piece of divided terrain information having a specific terrain divided into plural pieces, from an information provision device which is communicable with the terminal device and has a terrain information storage unit that stores terrain information including the divided terrain information. In the divided terrain information request step, the terminal device makes a request to the information provision device for one piece of the divided terrain information which corresponds to a rough determined position indicated in the rough determined position information. And, in the high-accuracy determined position information generation step, the terminal device generates high-accuracy determined position information, using elevation information included in the divided terrain information.

### BRIEF DESCRIPTION OF THE DRAWINGS

The invention will be described with reference to the accompanying drawings, wherein like numbers reference like elements, and wherein:
Fig. 1 is a schematic diagram showing a positioning system according to an embodiment of the invention;
Fig. 2 is a schematic diagram showing the main hardware configuration of a server;
Fig. 3 is a schematic diagram showing the main hardware configuration of a terminal;
Fig. 4 is a schematic diagram showing the main software configuration of the server;
Figs. 5A and 5B are schematic diagrams showing examples of an orthometric height model, etc.;
Figs. 6A and 6B are schematic diagrams showing examples of how to assign sequence numbers to mesh information, etc.;
Fig. 7 is a schematic diagram showing the main software configuration of the terminal;
Fig. 8 is a schematic diagram showing the mesh information downloaded, etc.; and
Fig. 9 is a schematic flowchart showing an operational example of the positioning system.

### DESCRIPTION OF THE EMBODIMENTS

Preferred embodiments of the invention will hereinafter be described in detail with reference to the accompanying drawings, etc.

The embodiments to be described below are preferred specific examples of the invention and therefore are given various technically preferable limitations, but the scope of the invention is not limited to these embodiments in so far as there is no statement in the following description to the effect of limiting the invention.

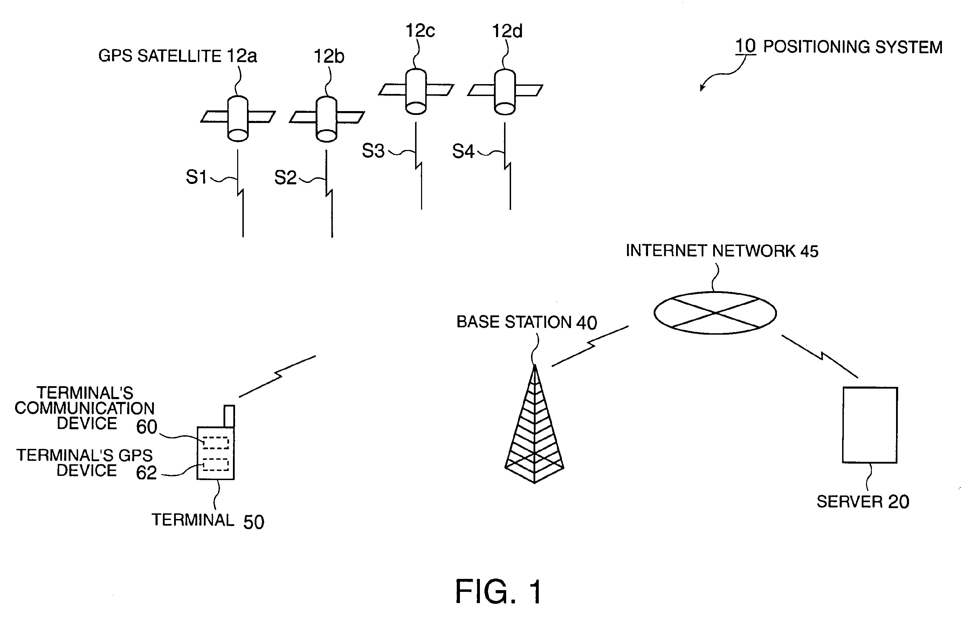

Fig. 1 is a schematic diagram showing a positioning system 10, etc. according to an embodiment of the invention. As shown in Fig. 1, the positioning system 10 has a server 20, a terminal 50, etc. The server 20 is an example of the information provision device, and the terminal 50 is an example of the terminal device.

The terminal 50 has a terminal's GPS device 62 for receiving signals S1 to S4, which are examples of the position-related signal, from GPS satellites 12a, 12b, 12c, and 12d, which are examples of the position information satellite. The terminal 50 also has a terminal's communication device 60 for communicating with the server 20 via a base station 40 that is a communication base station and an Internet network 45 that is a communication network.

The terminal 50 is, for example, a cellular phone, a PHS (Personal Handy-phone System), or a PDA (Personal Digital Assistance), but is not limited thereto.

Unlike this embodiment, the number of GPS satellites 12a etc. is not limited to four, but may be three or less and may be five or more.

(Main Hardware Configuration of Server 20)

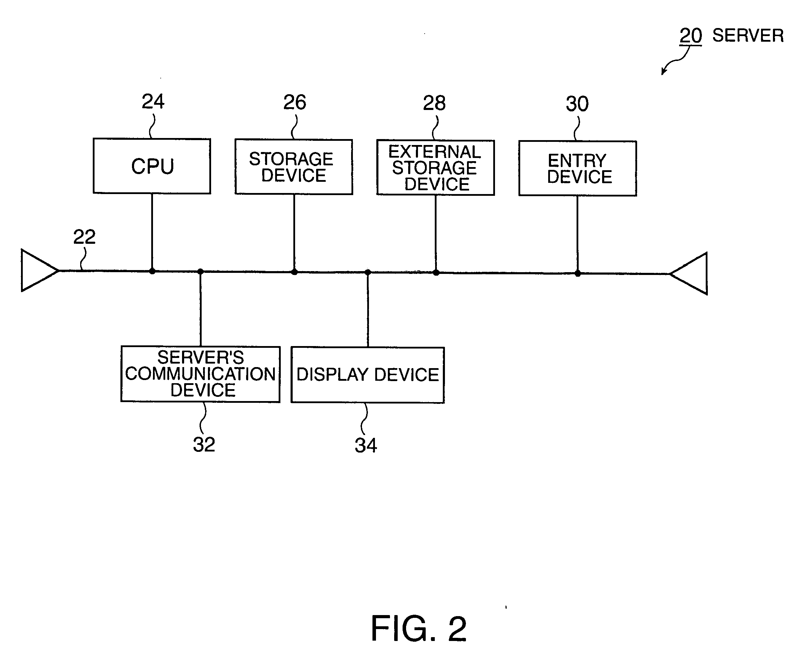

Fig. 2 is a schematic diagram showing the main hardware configuration of the server 20.

As shown in Fig. 2, the server 20 has a computer, and the computer has a bus 22.

A CPU (Central Processing Unit) 24, a storage device 26, an external storage device 28, etc. are connected to this bus 22. The storage device 26 is, for example, a RAM (Random Access Memory) or a ROM (Read Only Memory). The external storage device 28 is, for example, an HD (Hard Disk).

Besides, connected to this bus 22 are an entry device 30 for entering a variety of information, etc., a server's communication device 32 for communicating with the terminal 50, etc., and a display device 34 for displaying a variety of information. The server 20 is communicable with the terminal 50 by means of the server's communication device 32.

(Main Hardware Configuration of Terminal 50)

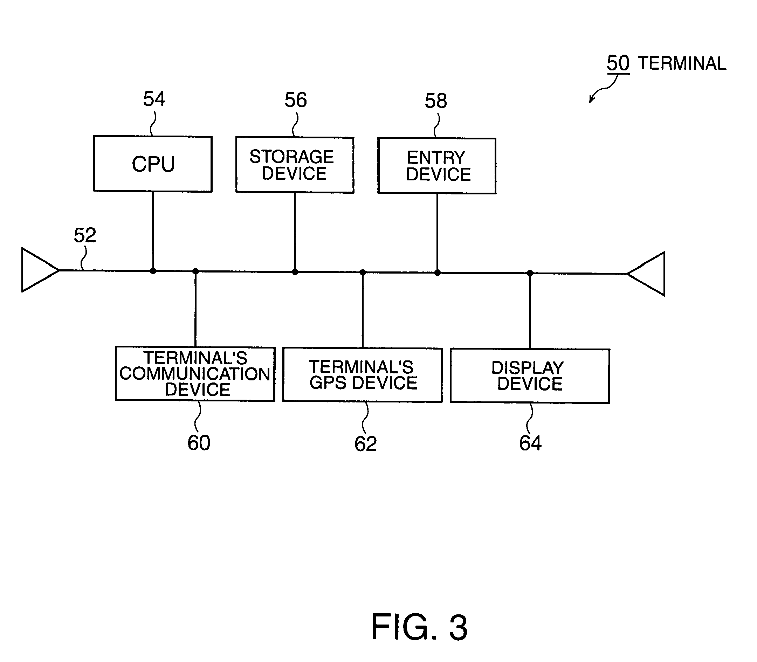

Fig. 3 is a schematic diagram showing the main hardware configuration of the terminal 50.

As shown in Fig. 3, the terminal 50 has a computer, and the computer has a bus 52.

A CPU 54, a storage device 56, etc. are connected to this bus 52.

Besides, connected to this bus 52 are an entry device 58 for entering a variety of information, etc., the terminal's communication device 60, the terminal's GPS device 62, and a display device 64 for displaying a variety of information, etc.

(Main Software Configuration of Server 20)

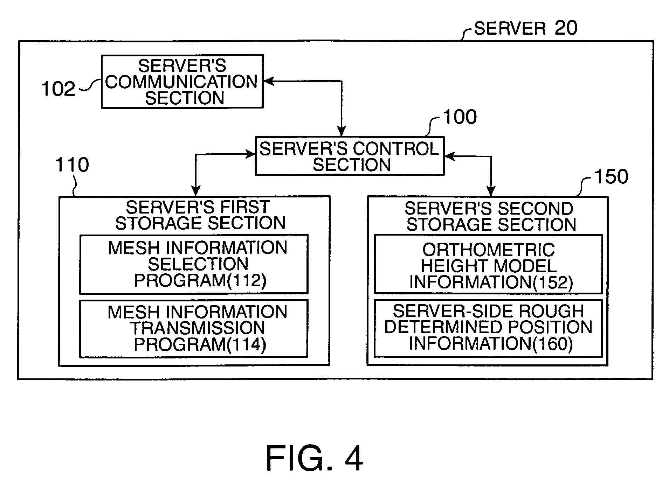

Fig. 4 is a schematic diagram showing the main software configuration of the server 20.

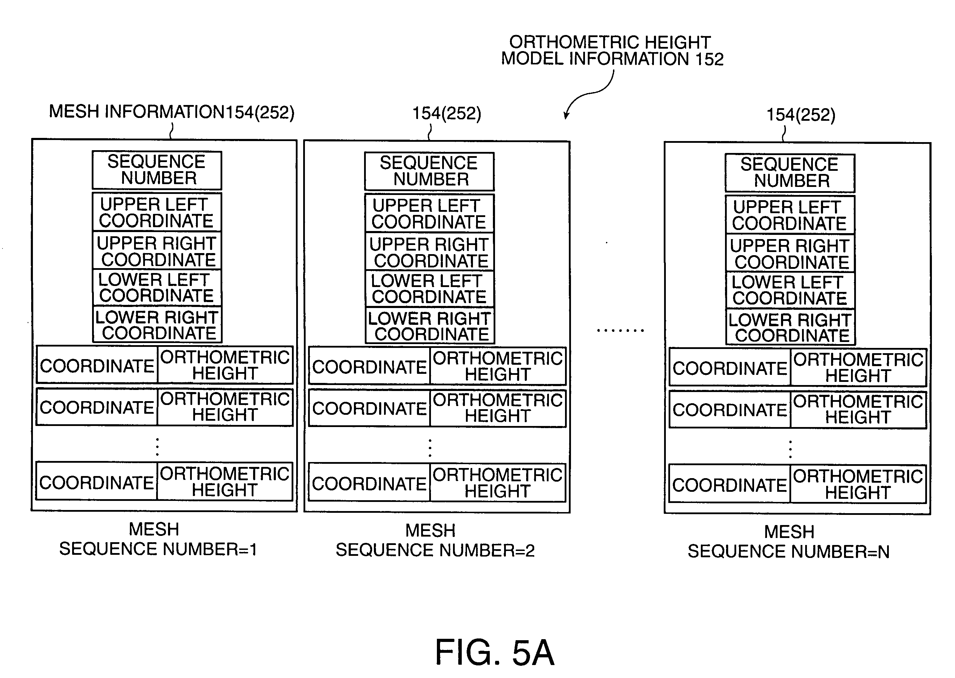

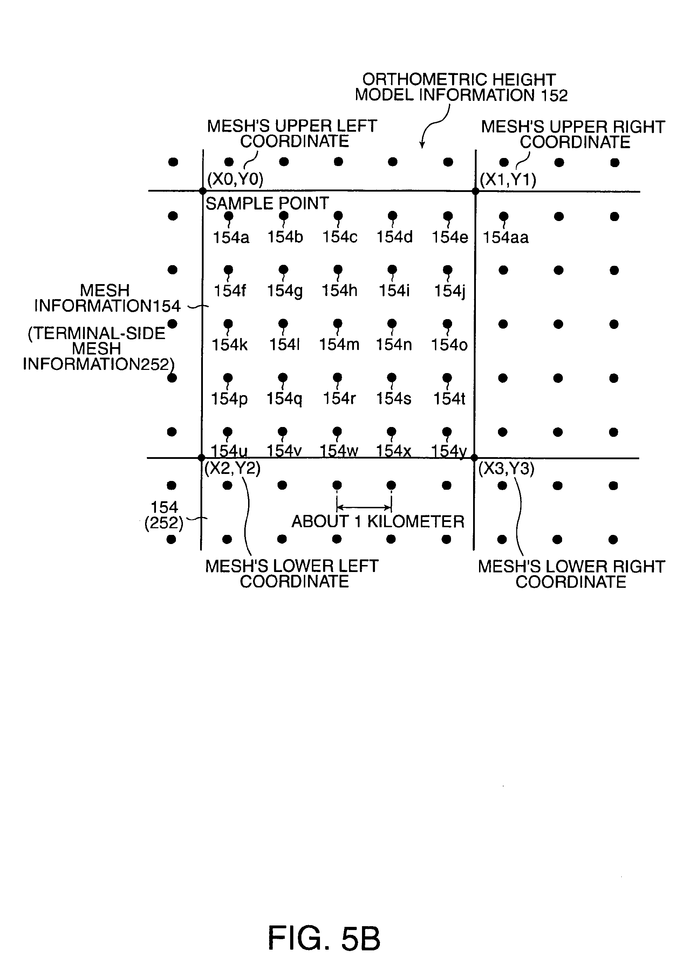

Figs. 5A and 5B are schematic diagrams showing examples of a conceptual diagram, etc. of orthometric height model information 152.

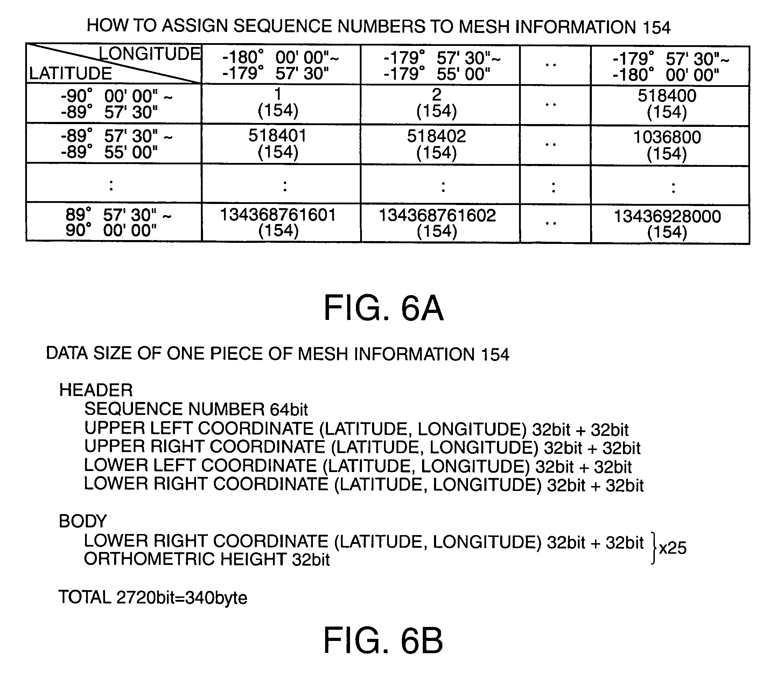

Figs. 6A and 6B are schematic diagrams showing examples of how to assign sequence numbers to mesh information 154, etc.

As shown in Fig. 4, the server 20 has a server's control section 100 that controls each section, a server's communication section 102 that corresponds to the server's communication device 32 of Fig. 2, a server's first storage section 110 that stores various programs, and a server's second storage section 150 that stores a variety of information.

As shown in Fig. 4, the server 20 stores the orthometric height model information 152 in the server's second storage section 150. This orthometric height model information 152 is created based on, for example, global data GTOPO30 (not shown) available from the U.S. Geological Survey (USGS).

Fig. 5A is a diagram showing an example of the data structure of the orthometric height model information 152. Fig. 5B is a conceptual diagram of the orthometric height model information 152.

As shown in Figs. 5A and 5B, the orthometric height model information 152 includes a plurality of the mesh information 154 having the entire earth, which is an example of the specific terrain, divided into plural pieces. As shown in Fig. 5B, each piece of the mesh information 154 has a plurality of sample points 154a to 154y.

Sequence numbers 1 etc. (N is an integer beginning with 1.) are assigned to each piece of the mesh information 154. As shown in Fig. 6A, these sequence numbers 1 etc. are assigned one to each piece of the mesh information 154 defined by latitude and longitude, thus making it possible to distinguish one piece of the mesh information 154 from another.

The sequence numbers are regularly assigned in the following manner. That is, for example, sequence number 1 is assigned to mesh information 154 specified by boundary coordinates of -90°00' 00" latitude, -89°57' 30" latitude, - 180°00' 00" longitude, and -179°57' 30" longitude. And, sequence number 2 is assigned to mesh information 154 that is shifted 2'30" in longitude alone, i.e., specified by boundary coordinates of -90°00'00" latitude, -89°57'30" latitude, - 179°57' 30" longitude, and -179°55' 00" longitude.

Accordingly, the configuration is such that the sequence numbers of the mesh information 154 can be easily specified by latitude and longitude as calculated by the server 20.

And, since the plurality of the mesh information 154 are arranged by the sequence numbers having regularity, the server 20 can gain high-speed and easy access thereto based on algorithm such as a binary search.

As shown in Figs. 5A and 5B, one piece of the mesh information 154 is distinguished from another by upper left coordinates, e.g., boundary coordinates of a mesh's upper left coordinate (x0, y0), a mesh's upper right coordinate (x1, y1), a mesh's lower left coordinate (x2, y2), and a mesh's lower right coordinate (x3, y3).

Each piece of the mesh information 154, which has the sample points 154a to 154y as aforesaid, includes information indicative of the coordinates and orthometric heights of the sample points 154a etc. Each piece of the mesh information 154 has, for example, 25 sample points, which are spaced a latitude or longitude of 30" or a distance of about 1 kilometer (km) apart from each other.

Accordingly, each piece of the mesh information 154 is defined by an area of about 5 kilometers (km) square.

The distance between sample points is about 1 kilometer (km), not only between sample points within one piece of the mesh information 154, e.g., sample points 154a and 154b (see Fig. 5B), but similarly between sample points straddling the boundary between adjacent pieces of the mesh information 154, e.g., sample points 154e and 154aa (see Fig. 5B).

The aforesaid orthometric height model information 152 is an example of the terrain information, and the mesh information 154 is an example of the divided terrain information. And, the server's second storage section 150 is an example of the terrain information storage unit.

As aforesaid, the orthometric height model information 152 has the plurality of the mesh information 154, but each piece of the mesh information 154 is part of the orthometric height model information 152 and therefore has a far smaller information amount (data size) than all the orthometric height model information 152. The information amount of all the orthometric height model information 152 is, for example, 1.5 GBytes, while the information amount of each piece of the mesh information 154 is, for example, 2720 bits as shown in Fig. 6B.

This information amount of the mesh information 154 is defined based on the information transmission rate of a communication line between the terminal 50 and the server 20.

Accordingly, the time required for the terminal 50 to acquire one piece of the mesh information 154 can be reduced as compared with when the information amount of the mesh information 154 is excessively larger than the information transmission rate of the communication line.

As shown in Fig. 4, the server 20 stores a mesh information selection program 112 in the server's first storage section 110. The mesh information selection program 112 is information required for the server's control section 100 to select one piece of the mesh information 154 which corresponds to a rough determined position indicated in server-side rough determined position information 160. That is, the mesh information selection program 112 and the server's control section 100 are examples of the divided terrain information selection unit.

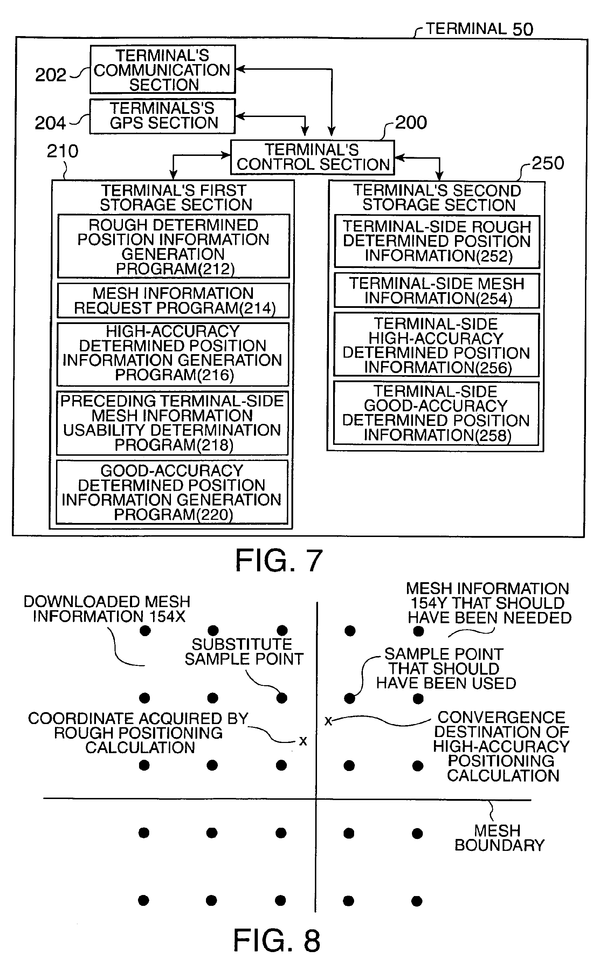

The server 20 acquires to-be-described terminal-side rough determined position information 252 (see Fig. 7) from the terminal 50 and stores it in the server's second storage section 150 as the server-side rough determined position information 160. The aforesaid terminal-side rough determined position information 252 and server-side rough determined position information 160 are examples of the rough determined position information.

As will be described in detail later, the positioning accuracy of this server-side rough determined position information 160 (terminal-side rough determined position information 252) is defined based on the distance between sample points.

As shown in Fig. 4, the server 20 stores a mesh information transmission program 114 in the server's first storage section 110. The mesh information transmission program 114 is information required for the server's control section 100 to transmit to the terminal 50 one piece of the mesh information 154 which corresponds to the rough determined position. That is, the mesh information transmission program 114 and the server's control section 100 are examples of the divided terrain information transmission unit.

With the above configuration, the server 20 can aid the terminal 50 in determining its position using the mesh information 154 each piece of which has a smaller information amount than all the orthometric height model information 152.

Unlike this embodiment, the server 20 may be configured to have orbit information (almanacs and/or ephemerides) of the GPS satellites 12a etc. and thus provide the terminal 50 with the orbit information together with the mesh information 154.

(Main Software Configuration of Terminal 50)
Fig. 7 is a schematic diagram showing the main software configuration of the terminal 50.

Fig. 8 is a schematic diagram showing downloaded mesh information 154X etc.

As shown in Fig. 7, the terminal 50 has a terminal's control section 200 that controls each section, a terminal's communication section 202 that corresponds to the terminal's communication device 60 of Fig. 3, a terminal's GPS section 204 that corresponds to the terminal's GPS device 62 of Fig. 3, a terminal's first storage section 210 that stores various programs, and a terminal's second storage section 250 that stores a variety of information.

As shown in Fig. 7, the terminal 50 stores a rough determined position information generation program 212 in the terminal's first storage section 210. The rough determined position information generation program 212 is information required for the terminal's control section 200 to generate terminal-side rough determined position information 252 for acquiring one piece of the mesh information 154 (see Fig. 5A) from the server 20. That is, the rough determined position information generation program 212 and the terminal's control section 200 are examples of the rough determined position information generation unit.

The positioning accuracy of this terminal-side rough determined position information 252 is defined based on the distance between sample points. Specifically, the positioning accuracy of the terminal-side rough determined position information 252 is within about 1 kilometer (km).

Since the distance between sample points is about 1 kilometer (km) as aforesaid, to select one sample point included in one piece of the mesh information 154, it is possible to select a sample point closest to the rough position of the terminal 50 and use the elevation information of the selected sample point.

As a result, this can increase the positioning accuracy of to-be-described terminal-side high-accuracy determined position information 256.

Furthermore, as shown in Fig. 8, when the terminal-side rough determined position information 252 is generated in mesh boundaries, coordinates indicated in the terminal-side rough determined position information 252 generated by a rough positioning calculation may fall in a range of mesh information 154X. Besides, the convergence destination of a high-accuracy positioning calculation may fall in a range of mesh information 154Y during the process of generating the to-be-described terminal-side high-accuracy determined position information 256. If the positioning accuracy of the terminal-side rough determined position information 252 is within the distance between any two of the sample points 1a etc., a sample point in the range of the downloaded mesh information 154X is substituted for a sample point in the range of the mesh information 154Y which should have been used. This can minimize a reduction in the positioning accuracy of the terminal-side high-accuracy determined position information 256.

The terminal's control section controls the terminal's GPS section 204, based on the rough determined position information generation program 212. The terminal's GPS section 204 repeats the calculation of determining the current position, based on the signals 1 etc. (see Fig. 1) from the GPS satellites 12a etc., thus increasing the positioning accuracy. And, the terminal's control section 100 generates the terminal-side rough determined position information 252 when the positioning accuracy reaches the aforesaid about 1 kilometer (km).

The terminal's control section 200 stores the generated terminal-side rough determined position information 252 into the terminal's second storage section 250.

To generate the aforesaid terminal-side rough determined position information 252 by performing 3D positioning, the terminal 20 may be configured to perform position determination, using the elevation information of mesh information 254 that has been acquired during the preceding position determination by using three of the GPS satellites 12a etc. Thereby, the terminal-side rough determined position information 252 can be generated more rapidly than by receiving the signals S1 etc. from four or more of the GPS satellites 12a etc.

Besides, position determination for generating the aforesaid terminal-side rough determined position information 252 may be 2D positioning. The reason is that information indicative of latitude and longitude is sufficient enough for the server 20 to select one piece of the mesh information 154, based on the terminal-side rough determined position information 252 (server-side rough determined position information 160). Besides, in the case of the 2D positioning, the terminal 50 can determine the current position, based on the signals S1 etc. from a minimum of three of the GPS satellites 12a etc. Therefore, the terminal-side rough determined position information 252 can be generated more rapidly than in the case of the 3D positioning that requires the signals S1 etc. from four or more of the GPS satellites 12a etc.

As shown in Fig. 7, the terminal 50 stores a mesh information request program 214 in the terminal's first storage section 210. The mesh information request program 214 is information required for the terminal's control section 200 to make a request to the server 20 for one piece of the mesh information 214 which corresponds to the rough determined position indicated in the terminal-side rough determined position information 252. That is, the mesh information request program 214 and the terminal's control section 200 are examples of the divided terrain information request unit.

Upon acquisition of the mesh information 154 from the server 20, the terminal's control section 200 stores it into the terminal's second storage section 250 as the terminal-side mesh information 254. This terminal-side mesh information 254 is also an example of the divided terrain information. And, the terminal's second storage section is an example of the divided terrain information storage unit.

As shown in Fig. 7, the terminal 50 stores a high-accuracy determined position information generation program 216 in the terminal's first storage section 210. The high-accuracy determined position information generation program 216 is information required for the terminal's control section 200 to generate the terminal-side high-accuracy determined position information 256, using orthometric height information (elevation information) included in the terminal-side mesh information 254. The terminal-side high-accuracy determined position information 256 is an example of the high-accuracy determined position information. And, the high-accuracy determined position information generation program 216 and the terminal's control section 200 are examples of the high-accuracy determined position information generation unit.

The orthometric height (elevation) of a sample point closest to the position indicated in the terminal-side rough determined position information 252, e.g., of sample point 154a (see Fig. 5B), can be found by acquiring the terminal-side mesh information 254 (see Fig. 5A). Based on the high-accuracy determined position information generation program 216, the terminal's control section 200 causes the terminal's GPS section 204 to carry out a positioning calculation, based on the signals S1 etc. from the GPS satellites 12a etc. and the orthometric height of sample point 154a (see Fig. 5B).

Here, since the orthometric height of sample point 154a (see Fig. 5B) has been determined, the current position of the terminal 50 need only be determined and calculated with its orthometric height (elevation) as a determinate value and with only its latitude, longitude, and time as indeterminate values. Consequently, the latitude and longitude can be calculated with good accuracy.

The terminal's control section 200 stores the generated terminal-side high-accuracy determined position information 256 into the terminal's second storage section 250.

As shown in Fig. 7, the terminal 50 stores a preceding terminal-side mesh information usability determination program 218 in the terminal's first storage section 210. The preceding terminal-side mesh information usability determination program 218 is information required for the terminal's control section 200 to determine whether or not the preceding terminal-side mesh information 254 stored in the terminal's second storage section 250 corresponds to a rough determined position indicated in the newly generated terminal-side rough determined position information 252. That is, the preceding terminal-side mesh information usability determination program 218 and the terminal's control section 200 are examples of the in-terminal divided terrain information usability determination unit.

The terminal's control section 200 is configured as follows. That is, the terminal's control section 200 determines, based on the preceding terminal-side mesh information usability determination program 218, that the preceding terminal-side mesh information 254 stored in the terminal's second storage section 250 corresponds to the rough determined position indicated in the newly generated terminal-side rough determined position information 252. Then, in this case, the terminal's control section 200 generates the terminal-side high-accuracy determined position information 256, using the elevation information included in the preceding terminal-side mesh information 254.

Consequently, if determining that the preceding terminal-side mesh information 254 stored in the terminal's second storage section 250 corresponds to the rough determined position of the newly generated terminal-side rough determined position information 252, the terminal 50 need not newly acquire the mesh information 154 from the server 20. Therefore, this can further reduce the time before the terminal-side high-accuracy determined position information 256 is generated after the terminal-side rough determined position information 252 is generated.

As shown in Fig. 7, the terminal 50 stores a good-accuracy determined position information generation program 220 in the terminal's first storage section 210. The good-accuracy determined position information generation program 220 is information required for the terminal's control section 200 to generate terminal-side good-accuracy determined position information 258 when unable to acquire the mesh information 154 from the server 20.

When the terminal 50 cannot acquire the mesh information 154 from the server 20, the terminal's control section 200 causes the terminal's GPS section 204 to determine and calculate the current position, using only the signals S1 etc. (see Fig. 1) from the GPS satellites 12a etc. Since the orthometric height (elevation) is also an indeterminate value, the terminal-side good-accuracy determined position information 258 may be inferior in positioning accuracy to the aforesaid terminal-side high-accuracy determined position information 256. However, the positioning calculation is repeated, thereby increasing the positioning accuracy of the terminal-side good-accuracy determined position information 258 as compared with the aforesaid terminal-side rough determined position information 252.

The terminal's control section 200 stores the generated terminal-side good-accuracy determined position information 258 into the terminal's second storage section 250.

Unlike this embodiment, the terminal 50 may be configured to receive the signals S1 etc., without determining the current position, before acquiring the mesh information 154 after generating the terminal-side rough determined position information 252.

After the terminal-side rough determined position information 252 is generated, reception of the signal S1 that has been used to generate the terminal-side rough determined position information 252 is brought to a stop. And, after the mesh information 154 is acquired, reception of the signals S1 etc. is started anew. Then, this requires time to catch the GPS satellites 12a etc.

In this respect, the reception of the signals S1 etc. is continuously performed even before the mesh information 154 is acquired after the terminal-side rough determined position information 252 is generated. Thereby, immediately after the mesh information 154 is acquired, generation of the terminal-side high-accuracy determined position information 256 can be started using the signals S1 etc. As a result, this can reduce the time before the terminal-side high-accuracy determined position information 256 is generated after the terminal-side rough determined position information 252 is generated.

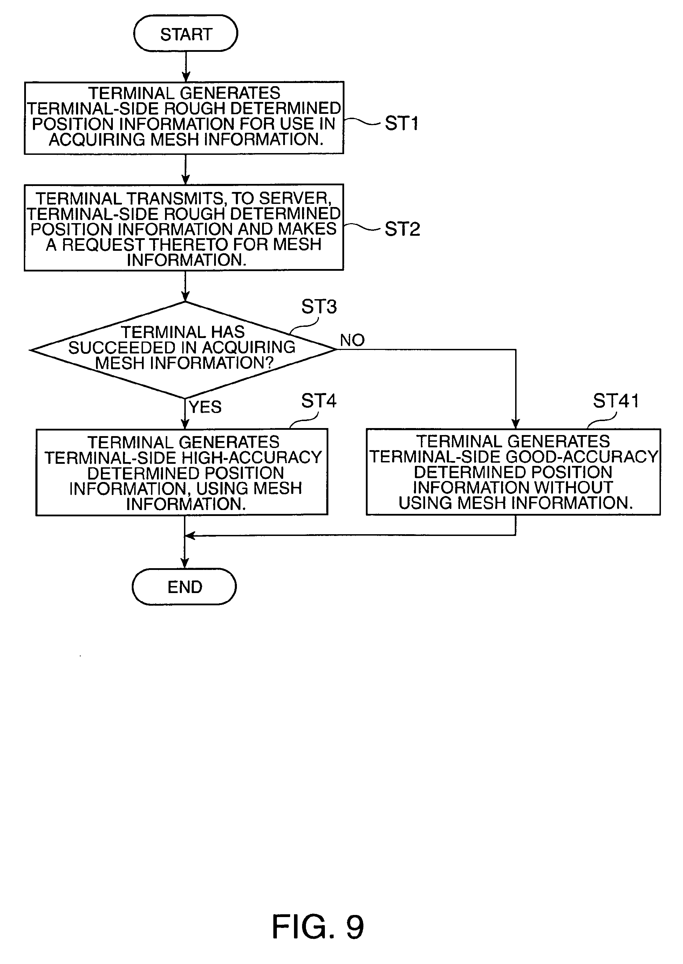

The aforesaid is the configuration of the positioning system 10 according to this embodiment, and an operational example thereof will be described below mainly using Fig. 9.

Fig. 9 is a schematic flowchart showing the operational example of the positioning system 10 according to this embodiment.

First, the terminal 50 generates the terminal-side rough determined position information 252 (see Fig. 7) for use in acquiring the mesh information 154 (see Fig. 5A) (step ST1 in Fig. 9). This step ST1 is an example of the rough determined position information generation step.

Subsequently, the terminal 50 transmits the terminal-side rough determined position information 252 to the server 20 and makes a request thereto for the mesh information 154 (step ST2). This step ST2 is an example of the divided terrain information request step.

Subsequently, the terminal 50 determines whether or not it has succeeded in acquiring the mesh information 154 from the server 20 (step ST3).

If the terminal 50 determines that it has succeeded in acquiring the mesh information 154 from the server 20, it generates the terminal-side high-accuracy determined position information 256 (see Fig. 7), using the orthometric information (elevation information) of the terminal-side mesh information 254 (see Fig. 7) (step ST4). This step ST4 is an example of the high-accuracy determined position information generation step.

In contrast, if the terminal 50 determines, in the aforesaid step ST3, that it has not succeeded in acquiring the mesh information 154 from the server 20, then it generates the terminal-side good-accuracy determined position information 258 (see Fig. 7) without using the terminal-side mesh information 254 (see Fig. 7) (step ST41).

As described above, according to the positioning system 10, it is possible to make a high-accuracy positioning calculation, using the terrain information, while reducing an increase in burden on and a terrain information transmission/reception processing burden on a recording unit of a GPS receiver.

Besides, large-capacity orthometric height model data is disposed on the server 20 side, and the terminal 50 downloads and uses only a necessary portion thereof when necessary, thereby eliminating the need to have a large-capacity memory region on the terminal 50 side, so that the production cost of the terminal 50 can be reduced.

The positioning system 10 of this embodiment is effective especially when multipath occurs, and an experiment conducted at Shinjuku in Tokyo proves that variation in positioning results decreases by about 30 meters (m).

(Program, Computer Readable Recording Medium, etc.)
There can be provided a control program of the terminal device for allowing the computer to execute the rough determined position information generation step, divided terrain information request step, high-accuracy determined position information generation step, etc. of the aforesaid operational example.

Besides, there can also be provided a computer readable recording medium, etc. having recorded therein such a control program, etc. of the terminal device.

A program storage medium, which is used to install these control program, etc. of the terminal device into the computer and bring them into a state ready to be executed by the computer, can be realized with, for example, not only a package medium, such as a flexible disc like a floppy (registered trademark), a CD-ROM (Compact Disc Read Only Memory), a CD-R (Compact Disc-Rewritable), a CD-RW (Compact Disc-Rewritable), a DVD (Digital Versatile Disc), but also a semiconductor memory, a magnetic disc, or a magneto-optical disc, in which a program is stored on a temporary or permanent basis.

The invention is not limited to the aforesaid embodiments. Furthermore, the invention may be configured by combining the aforesaid embodiments with each other.

## Claims

1. A positioning system comprising:
a terminal device that determines a current position based on a position-related signal from a position information satellite; and
an information provision device that is communicable with the terminal device and has a terrain information storage unit that stores terrain information which includes divided terrain information having a specific terrain divided into plural pieces, wherein the terminal device includes:
a rough determined position information generation unit that generates rough determined position information for acquiring one piece of the divided terrain information from the information provision device;
a divided terrain information request unit that makes a request to the information provision device for one piece of the divided terrain information which corresponds to a rough determined position indicated in the rough determined position information; and
a high-accuracy determined position information generation unit that generates high-accuracy determined position information, using elevation information included in the divided terrain information, and wherein the information provision device includes:
a divided terrain information selection unit that selects one piece of the divided terrain information which corresponds to the rough determined position indicated in the rough determined position acquired from the terminal device; and
a divided terrain information transmission unit that transmits to the terminal device one piece of the divided terrain information which corresponds to the rough determined position.

2. A positioning system according to claim 1, wherein the information amount of each piece of the divided terrain information is defined based on the information transmission rate of a communication line between the terminal device and the information provision device.

3. A positioning system according to claim 1, wherein
each piece of the divided terrain information has a plurality of sample points, and wherein
the positioning accuracy of the rough determined position information is defined based on the distance between the sample points.

4. A terminal device that determines a current position based on a position-related signal from a position information satellite, comprising:
a rough determined position information generation unit that is communicable with the terminal device and that generates rough determined position information for acquiring one piece of divided terrain information having a specific terrain divided into plural pieces, from an information provision device having a terrain information storage unit that stores terrain information including the divided terrain information;
a divided terrain information request unit that makes a request to the information provision device for one piece of the divided terrain information which corresponds to a rough determined position indicated in the rough determined position information; and
a high-accuracy determined position information generation unit that generates high-accuracy determined position information, using elevation information included in the divided terrain information.

5. A terminal device according to claim 4, configured to receive the position-related signal without determining the current position before acquiring the divided terrain information after generating the rough determined position information.

6. A terminal device according to claim 4, further comprising:
a divided terrain information storage unit that stores the divided terrain information; and
an in-terminal divided terrain information usability determination unit that determines whether or not the divided terrain information, which has been acquired during the preceding position determination and stored in the divided terrain information storage unit, corresponds to a rough determined position indicated in the rough determined position information newly generated, wherein
the terminal device is configured to generate the high-accuracy determined position information, using elevation information included in the divided terrain information that has been acquired during the preceding position determination and stored in the divided terrain information storage unit, based on the determination result of the in-terminal divided terrain information usability determination unit.

7. An information provision device which is communicable with a terminal device that determines a current position based on a position-related signal from a position information satellite and which has a terrain information storage unit that stores terrain information including divided terrain information having a specific terrain divided into plural pieces, comprising:
a divided terrain information selection unit that selects one piece of the divided terrain information which corresponds to a rough determined position indicated in rough determined position information acquired from the terminal device; and
a divided terrain information transmission unit that transmits to the terminal device one piece of the divided terrain information which corresponds to the rough determined position.

8. A terminal device's control method comprising:
generating rough determined position information in which a terminal device, which determines a current position based on a position-related signal from a position information satellite, generates rough determined position information for acquiring one piece of divided terrain information having a specific terrain divided into plural pieces, from an information provision device which is communicable with the terminal device and has a terrain information storage unit that stores terrain information including the divided terrain information;
requesting divided terrain information in which the terminal device makes a request to the information provision device for one piece of the divided terrain information which corresponds to a rough determined position indicated in the rough determined position information; and
generating high-accuracy determined position information in which the terminal device generates high-accuracy determined position information, using elevation information included in the divided terrain information.

9. A terminal device's control program allowing for execution of:
a rough determined position information generation step in which a terminal device, which determines a current position based on a position-related signal from a position information satellite, generates rough determined position information for acquiring one piece of divided terrain information having a specific terrain divided into plural pieces, from an information provision device which is communicable with the terminal device and has a terrain information storage unit that stores terrain information including the divided terrain information;
a divided terrain information request step in which the terminal device makes a request to the information provision device for one piece of the divided terrain information which corresponds to a rough determined position indicated in the rough determined position information; and
a high-accuracy determined position information generation step in which the terminal device generates high-accuracy determined position information, using elevation information included in the divided terrain information.
